# FASCICULE DE BREVET EUROPEEN

(11) **EP 3 238 992 B1**
(45) Date de publication et mention de la délivrance du brevet: **09.03.2022**
(21) Numéro de dépôt: 17167376.7
(22) Date de dépôt: 20.04.2017
(51) Int. Cl.: B60Q 1/00, B60Q 1/115, B60Q 1/12, F21S 41/148, F21S 41/32, F21S 41/39, F21S 41/675, F21W 102/18

(54) **MODULE LUMINEUX ROTATIF**
DREHBARES LEUCHTMODUL
ROTARY LIGHT MODULE

(30) Priorité: 28.04.2016 FR 1653835
(43) Date de publication de la demande: 01.11.2017
(73) Titulaire: Valeo Vision, 93012 Bobigny Cedex (FR)
(72) Inventeur: CHOLLEY, Benoit, 49500 Segre (FR)
(74) Mandataire: Valeo Visibility

(56) Documents cités:
- WO-A1-2012/098142
- WO-A1-2015/107273
- WO-A1-2016/020600

## Description

L'invention a trait au domaine de l'éclairage et/ou de la signalisation, notamment pour véhicule automobile. Plus particulièrement, l'invention a trait à un module lumineux pour véhicule automobile, ainsi qu'à un dispositif d'éclairage et/ou de signalisation comprenant un tel module lumineux.

Des dispositifs d'éclairage et/ou de signalisation peuvent comporter un ou plusieurs modules lumineux montés rotatifs autour d'un axe, notamment pour répondre à des problématiques d'éclairage adaptatif. Notamment, le document EP 295 74 64 décrit un dispositif d'éclairage et/ou de signalisation pour véhicule automobile qui comprend un boîtier et un ensemble d'au moins deux modules lumineux, dans lequel au moins une partie de chaque module lumineux est montée mobile en rotation autour d'un axe sous l'effet d'un actionneur pour déplacer transversalement le faisceau lumineux correspondant en sortie du module lumineux. Un dispositif de commande associé est apte à élaborer distinctement pour chaque module lumineux des instructions de commande d'éclairage spécifique en fonction des conditions de circulation. Les documents WO2012098142, WO2016020600 Al et WO2016020600 Al décrivent des autres dispositifs d'éclairage et/ou de signalisation pour véhicule automobile connus.

De tels modules rotatifs sont particulièrement adaptés à la réalisation de fonctions d'éclairage directionnel, plus connues sous l'acronyme anglais DBL (pour Dynamic Bending Light), dans lesquelles l'objectif est d'éclairer dynamiquement les virages lorsque le véhicule tourne. Le module lumineux étant monté pivotant autour d'un axe de rotation sensiblement vertical, on peut s'assurer, dans un virage, que le faisceau projeté en sortie du projecteur n'est plus orienté dans l'axe longitudinal du véhicule mais vers l'intérieur du virage.

La présente invention s'inscrit dans un contexte de multiplication des fonctions d'éclairage que l'on peut proposer aux usagers, en plus de la fonction d'éclairage directionnel précédemment décrite. On comprend qu'il est intéressant que la multiplication de ces fonctions s'accompagne d'une recherche de réduction du nombre de modules dans un projecteur, pour optimiser l'encombrement, et/ou d'une réduction du nombre de composants dans chacun de ces modules.

L'invention a pour objet un dispositif d'éclairage et/ou de signalisation pour véhicule automobile, logeant au moins un module lumineux spécifique.

Plus particulièrement, l'invention concerne un module lumineux pour véhicule automobile comprenant au moins une source de lumière apte à émettre des rayons lumineux, des éléments de déviation optique montés mobiles en rotation autour d'un premier axe de rotation, et agencés de manière à dévier lesdits rayons lumineux pour former un faisceau lumineux, un actionneur apte à déplacer en rotation l'élément optique,

Selon l'invention, le module lumineux est par ailleurs configuré pour être mobile en rotation autour d'un deuxième axe de rotation sensiblement perpendiculaire au premier axe de rotation.

Ainsi, on peut prendre en charge avec un même module lumineux la gestion de la fonction d'éclairage directionnel de type BDL, pour éclairer l'intérieur des virages par un déplacement transversal, indifféremment vers la gauche ou vers la droite, du faisceau lumineux global de sortie, ainsi que la modification de l'assiette du faisceau lumineux global émis en permettant le déplacement vertical du faisceau lumineux global, indifféremment vers le haut ou vers le bas. Dans ce dernier cas, on peut notamment favoriser, lorsque le véhicule se déplace à grande vitesse, une lecture anticipée des panneaux de signalisation placés en hauteur sur des voies de circulation comme les autoroutes, ou bien augmenter ou réduire la portée des phares en fonction de la charge du véhicule qui modifie son inclinaison générale. L'invention possède des caractéristiques spécifiées dans les revendications.

En outre l'invention possède au moins l'une des caractéristiques suivantes, considérées isolément ou en combinaison avec d'autres caractéristiques :
- le premier et le deuxième axe de rotation sont sensiblement perpendiculaires l'un par rapport à l'autre ;
- des éléments de guidage en rotation autour du premier axe de rotation sont agencés entre les éléments de déviation optique et le support ;
- l'actionneur comporte un arbre de sortie s'étendant le long du premier axe de rotation et portant les éléments de déviation optique ;
- l'arbre de sortie et les éléments de guidage en rotation sont disposés de part et d'autre des éléments de déviation optique le long du premier axe de rotation ;
- les éléments de déviation optique consistent en un réflecteur de forme sensiblement elliptique, la source de lumière étant disposé sensiblement au voisinage d'un premier foyer dudit réflecteur ;
- au moins un module lumineux est associé à une bielle qui lui est propre et qui est solidaire d'une part à l'actionneur et à une deuxième extrémité opposée un support venant en recouvrement des éléments de déviation optiques du module lumineux associé ;
- le support porte la source de lumière associée au module lumineux ;
- le deuxième axe de rotation est formé au moins en partie par un élément porté par le support ;
- le deuxième axe de rotation est défini au moins en partie par deux excroissances s'étendant en saillie du support, configurées pour coopérer avec des paliers ; les excroissances peuvent présenter chacune la forme d'un pion cylindrique dont l'orientation participe à définir selon le deuxième axe de rotation ;
- le module est piloté en rotation autour du deuxième axe de rotation par l'intermédiaire d'un élément d'actionnement apte à pousser sur la bielle ;
- l'élément d'actionnement est configuré pour pousser sur une première extrémité de la bielle à l'opposé de l'extrémité de la bielle solidaire du support porteur du deuxième axe de rotation ;
- l'élément d'actionnement consiste en une plaque porteuse de moyens de fixation aptes à coopérer avec des moyens de fixation portés par la bielle.

L'invention porte également sur un dispositif d'éclairage et/ou de signalisation pour véhicule automobile comprenant au moins un module lumineux tel que précédemment décrit.

Notamment, le dispositif peut comporter un boîtier et une glace de fermeture délimitant un logement du au moins un module lumineux. Et ce module lumineux peut être associé à au moins une platine solidaire du boîtier et porteuse de paliers participant à la définition du deuxième axe de rotation. Le faisceau lumineux projeté en sortie de module lumineux est configuré pour traverser cette glace de fermeture avant d'être projeté sur la scène de route en amont du véhicule.

Le dispositif peut comporter un ensemble d'au moins deux modules lumineux, participant chacun à la formation d'un faisceau lumineux, l'addition des faisceaux lumineux formant en sortie du dispositif un faisceau lumineux global, répondant notamment à des normes règlementaires d'éclairage et/ou de signalisation de véhicule automobile.

Dans chacun de ces cas décrits ci-dessus, le deuxième axe de rotation peut être propre à chaque module lumineux.

D'autres caractéristiques et avantages de la présente invention apparaitront plus clairement à l'aide de la description et des dessins parmi lesquels :
- la figure 1 est une vue en perspective de trois quart avant d'un module lumineux ;
- la figure 2 une vue en perspective de dessus du module lumineux de la figure 1 ;
- la figure 3 est une vue en perspective de profil trois quart avant d'un dispositif d'éclairage et/ou de signalisation selon un premier mode de réalisation, comportant un ensemble de trois modules lumineux tel que représenté sur la figure 1 ;
- la figure 4 est une vue de dessus du dispositif d'éclairage et/ou de signalisation de la figure 3 ;
- la figure 5 est une vue en perspective de trois quart avant du dispositif d'éclairage et/ou de signalisation selon un deuxième mode de réalisation ; et
- la figure 6 est une vue en perspective trois quart arrière du dispositif d'éclairage et/ou de signalisation de la figure 5.

Dans la description qui va suivre, on adoptera à titre non limitatif une orientation longitudinale, verticale et transversale selon l'orientation traditionnellement utilisée dans l'automobile. De plus, les termes inférieur et supérieur doivent être interprétés lorsque l'objet est en position normale d'utilisation.

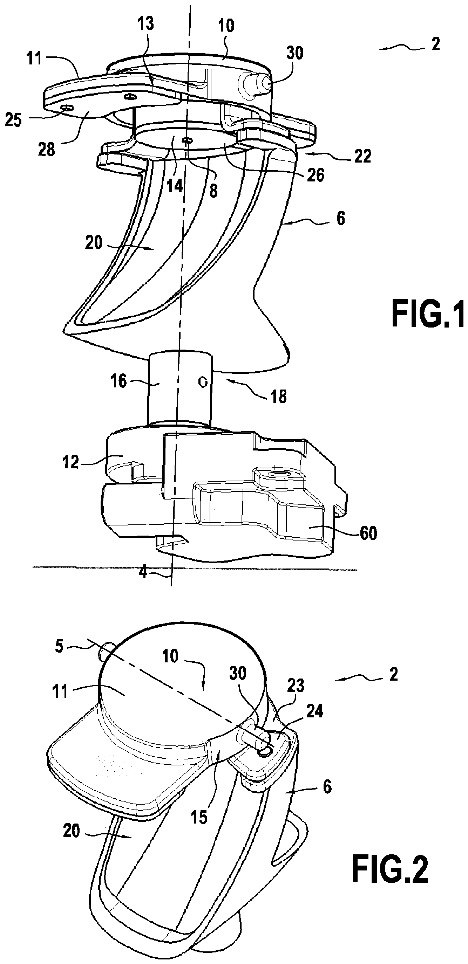

Un dispositif d'éclairage et/ou de signalisation 1 selon l'invention comprend au moins un module lumineux 2 apte à déplacer le faisceau lumineux en sortie de module selon deux directions, notamment sensiblement transversalement autour d'un premier axe de rotation 4 et sensiblement verticalement autour d'un deuxième axe de rotation 5, et dont un exemple de réalisation est illustré sur les figures 1 et 2.

Le module lumineux 2 comprend des éléments de déviation optique 6 de rayons émis par une source de lumière 8 portée par un support 10. Les éléments de déviation optique 6 sont agencés autour du premier axe de rotation 4 et ils sont entrainés en rotation par un actionneur 12 autour du premier axe de rotation 4 pour déplacer transversalement un faisceau lumineux correspondant en sortie du module lumineux 2.

Les éléments de déviation optique 6 coopèrent avec le support 10 venant en recouvrement du module lumineux 2, notamment par l'intermédiaire de éléments de guidage en rotation ici non représentés. Le support 10 comprend une première face, dite face supérieure, 11 et une deuxième face, dite face inférieure 13, la face inférieure et la face supérieure étant relié axialement à leur périphérie par une face latérale 15.

On comprend que le support 10 est d'une part porteur de la source de lumière 8, qui émet des rayons en direction des éléments de déviation optique 6, et d'autre part porteur d'une partie des éléments de guidage en rotation 14 des éléments de déviation optique 6 autour du premier axe de rotation 4. Les éléments de déviation optique 6, qui seront décrit plus en détails ci-après, sont disposés entre les éléments de guidage et l'actionneur 12 relativement à leur agencement le long du premier axe de rotation 4.

Des moyens de commande (ici non représentés) pilotent l'actionneur 12. Un mouvement est transmis par cet actionneur 12 à un arbre de sortie 16, qui transmet aux éléments de déviation optique 6 le mouvement de rotation commandé autour du premier axe de rotation 4. Tel que représenté, l'arbre de sortie 16 est rendu solidaire des éléments de déviation optique 6 au niveau d'une première extrémité 18, ici considérée comme inférieure par rapport à l'orientation définie précédemment.

Les éléments de déviation optique 6 consistent ici en un réflecteur elliptique ou parabolique, avec une face réfléchissante 20 configurée pour réfléchir les rayons de lumière émis par la source de lumière 8, qui est sensiblement disposée au voisinage d'un premier foyer des éléments de déviation optique 6. Un faisceau lumineux est ainsi généré pour former un faisceau règlementaire du point de vue de l'éclairage et/ou de la signalisation d'un véhicule automobile.

On notera que sans sortir du contexte de l'invention, les éléments de déviation optique 6 peuvent prendre différentes formes dès lors qu'ils sont entraînés en rotation par un actionneur 12 à une première extrémité relativement au premier axe de rotation 4 et que leur agencement par rapport à la source de lumière permet de former un faisceau règlementaire.

Au voisinage d'une deuxième extrémité 22 des éléments de déviation optique 6, ici l'extrémité désignée supérieure selon l'orientation décrite précédemment, c'est-à-dire à l'extrémité opposée à la première extrémité 18 où s'étend l'actionneur 12, sont disposés des éléments de guidage en rotation supérieurs 14 par l'intermédiaire desquels les éléments de déviation optique 6 coopèrent avec le support 10.

Notamment afin de permettre la fixation d'une partie de ces éléments de guidage en rotation 14 sur les éléments de déviation optique 6, on prévoit à la deuxième extrémité 22 un bord 23 qui forme, à la périphérie de la face réfléchissante 20, une surface d'appui pour cette partie des éléments de guidage en rotation 14.

On comprend que la disposition des éléments de guidage en rotation 14 et des moyens d'entraînement que forment l'actionneur 12 et l'arbre de sortie 16, de part et d'autre des éléments de déviation optique 6, permet un guidage optimal en rotation des éléments de déviation optique autour de l'axe de rotation.

Bien entendu, ce guidage en rotation autour du premier axe de rotation 4 est important dans le contexte de l'invention où le module est amené à pivoter autour d'un deuxième axe de rotation sensiblement perpendiculaire au premier axe de rotation, ce qui nécessite une grande précision dans la position du module. Mais on comprendra que, dans le cas où le module est précisément entraîné en rotation autour du premier axe par la seule coopération des moyens d'entraînement, on pourra sans sortir du contexte de l'invention se passer des éléments de guidage en rotation supérieurs 14.

Les éléments de guidage en rotation 14 et l'arbre de sortie 16 rendent aptes les éléments de déviation optique 6 à effectuer une rotation allant jusqu'à 360 degrés autour du premier axe de rotation 4, sensiblement vertical, sans effort sur l'actionneur 12, et avec une grande précision dans le positionnement relatif des éléments de déviation optique 6 et de la source de lumière 8, avantageusement centrée sur le premier axe de rotation 4.

Les éléments de guidage en rotation supérieurs 14 peuvent être formés par une ou plusieurs pièces intermédiaires agencés entre le support et les éléments de déviation optique et ils peuvent notamment être formés en deux parties parmi lesquelles une première partie solidaire du support 10 et une deuxième partie solidaire des éléments de déviation optique 6, visible sur les figures 1 et 2. A titre d'exemple, les éléments de guidage peuvent consister en un rotor solidaire des éléments de déviation optique, notamment par une fixation de pattes axiales 24 prolongeant le rotor et coopérant avec le bord 23 agencé à la périphérie de la face réfléchissante 20, et en un stator solidaire du support 10 et autour duquel tourne le rotor. On comprend que la forme des éléments de guidage en rotation supérieurs 14 pourrait être modifié sans pénaliser la fonction de guidage autour du premier axe de rotation et les éléments de guidage en rotation pourraient notamment être réalisés sans pièce intermédiaire, par coopération d'une portée annulaire en saillie du support servant de chemins de guidage à des pions cylindriques s'étendant axialement, c'est-à-dire sensiblement parallèlement au premier axe de rotation, depuis le bord 23 agencé à la périphérie de la face réfléchissante 20.

Tel que précédemment décrit, le module lumineux 2, et plus particulièrement le support 10, est porteur d'au moins une source de lumière 8, étant entendu qu'il peut être porteur d'une pluralité de sources de lumière parmi lesquelles une source de lumière 8 et une source de lumière additionnelle 25, qui peuvent être des sources à semi-conducteur, de type diodes électroluminescentes.

La source de lumière 8 est sensiblement alignée sur le premier axe de rotation 4. On entend par l'expression " sensiblement alignée " que la distance entre le centre géométrique de la source de lumière telle qu'une diode électroluminescente et le premier axe de rotation 4 du module lumineux 2 n'est pas supérieure aux dimensions de la diode électroluminescente. Cette dernière peut être fixée et positionnée sur la deuxième face, ou face inférieure, 13 du support 10 ici recouverte d'une première plaque de circuit imprimé 26.

La ou les sources de lumière additionnelles 25 sont situées en périphérie de la source de lumière 8. Ces dernières peuvent être fixées et positionnées sur une deuxième plaque de circuit imprimé 28, elle-même fixée sur la face inférieure 13 du support 10 dirigée vers les éléments de déviations optique 6, tel que visible sur la figure 1.

Ces sources de lumière ont dans le module lumineux 2 des fonctions d'éclairages et/ou de signalisation distinctes, et notamment la source de lumière principale participe à la réalisation d'une fonction d'éclairage de type feu de croisement ou feu de route tandis que les sources de lumière additionnelles participent à des fonctions de signalisation, par l'intermédiaire d'écrans qui seront décrits ci-après. La source de lumière principale est notamment configurée pour que ses rayons lumineux émis soient orientés vers les éléments de déviation optique 6.

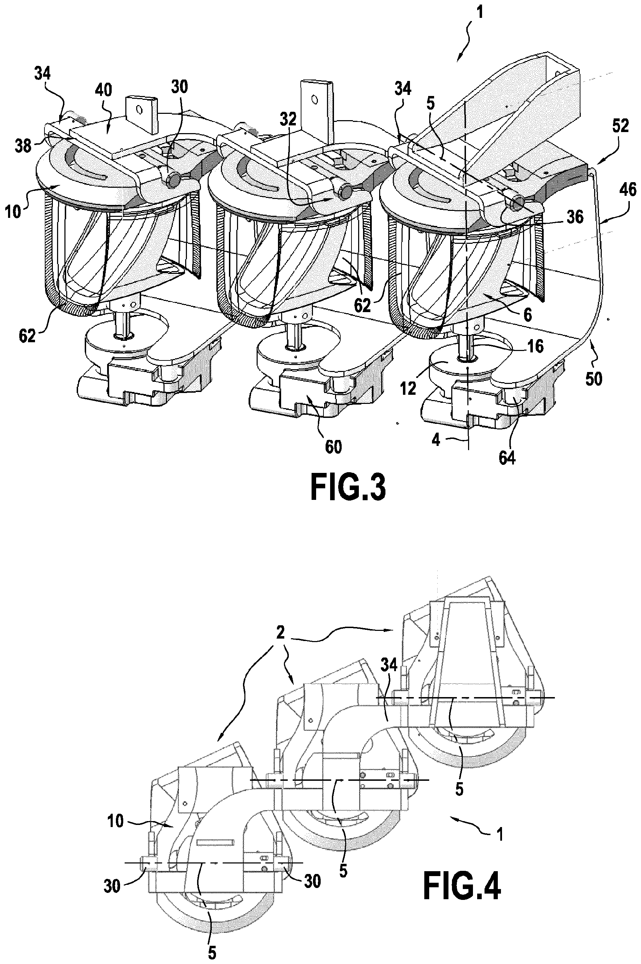

On va maintenant décrire les moyens associés à la réalisation d'une fonction de rotation autour du deuxième axe de rotation 5, sensiblement perpendiculaire au premier axe de rotation 4, notamment en se référant aux figures 3 et 4.

Le support 10 porte, en saillie de sa face latérale périphérique 15, des excroissances 30, diamétralement opposées et alignées de manière à définir, dans leur coopération avec des paliers 32 (visible sur la figure 3) qui seront décrits ci-après, l'orientation du deuxième axe de rotation 5. Dans l'exemple illustré, les excroissances 30 consistent respectivement en un pion cylindrique, mais on comprend qu'elles pourraient prendre tout autre forme permettant la coopération avec le palier 32, et par exemple une forme sphérique.

Ces excroissances 30 sont ici réalisées pour participer à la formation d'un deuxième axe de rotation 5 distinct du premier axe de rotation 4 autour duquel les éléments de déviation optique 6 sont configurés pour tourner, via l'actionneur 12 et les éléments de guidage en rotation.

Ces excroissances sont configurées pour coopérer avec des paliers coaxiaux portés une pièce de structure fixée au boîtier du dispositif d'éclairage et/ou de signalisation tel qu'il sera décrit plus en détails ci-après. Chaque palier comprend une gorge dans laquelle s'insère l'excroissance 30, consistant en un pion, ou en un plot, du support 10. C'est la coopération des paliers et des excroissances qui définit le deuxième axe de rotation 5 pour le module lumineux 2. Un jeu de fonctionnement axial, dans la direction du premier axe de rotation 4, permet d'une part la rotation sans frottement, sous la platine, du module autour du premier axe de rotation, et il permet un basculement du module sous la platine en rotation autour du deuxième axe de rotation. La pièce de structure et les paliers qu'elle porte seront décrits plus en détails ci-après dans la description du dispositif d'éclairage et/ou de signalisation.

Dans une configuration donnée, le premier axe de rotation 4 est sensiblement vertical et permet la rotation transversal (dans le sens gauche-droite et droite-gauche) du faisceau lumineux en sortie du module lumineux 2 correspondant, au sein du dispositif d'éclairage et/ou de signalisation. Le deuxième axe de rotation 5 est sensiblement horizontal et permet le déplacement vertical (dans le sens haut-bas et bas-haut) du faisceau lumineux en sortie de module lumineux 2 correspondant, au sein du dispositif d'éclairage et/ou de signalisation. Ces deux axes de rotations 4 et 5, sont distincts et non parallèles, et avantageusement perpendiculaires entre eux.

On a illustré sur la figure 3 un module avec le premier et le deuxième axe de rotation correspondant. On comprendra que dans le cas où chacun des modules lumineux d'un dispositif d'éclairage et/ou de signalisation comporte des moyens de mise en rotation autour de deux axes, il sera avantageux en termes de cohérence du faisceau lumineux global projeté que les premier et deuxième axes de rotation propres à chaque module lumineux soient sensiblement parallèles respectivement au premier axe de rotation 4 et au deuxième axe de rotation 5 des modules lumineux 2 voisins.

Le module lumineux 2 selon l'invention, tel qu'il vient d'être décrit, est disposé dans un boîtier (non représenté) de projecteur de véhicule automobile. On comprend que l'on pourra disposer d'une pluralité de module lumineux 2 tel qu'ils viennent d'être décrits, ceux-ci formant un dispositif d'éclairage et/ou de signalisation, et qu'il est avantageux que les deux projecteurs, gauche et droit, comporte un ensemble équivalent.

On va maintenant décrire plus en détails le dispositif d'éclairage et/ou de signalisation 1 selon l'invention, en se référant aux modes de réalisation des figures 3 à 6, selon lesquels le dispositif d'éclairage et/ou de signalisation 1 comprend trois modules lumineux 2.

Chacun des trois modules du dispositif d'éclairage et/ou de signalisation 1 sont selon l'invention mobiles en rotation autour d'un premier axe de rotation 4 et autour du deuxième axe de rotation 5. On comprend qu'un seul module lumineux pourrait présenter cette caractéristique de double rotation dans le dispositif d'éclairage et/ou de signalisation sans sortir du contexte de l'invention.

Une platine 34 est fixée au boîtier et elle est configurée pour positionner correctement le support 10, et donc la source lumineuse principale 8, de chaque module lumineux 2 par rapport au projecteur du véhicule (non représenté).

De plus, et tel que cela a pu être précisé précédemment, la platine 34 participe à la formation du deuxième axe de rotation 5, notamment par l'agencement de deux paliers 32 coaxiaux par module lumineux, qui sont venus de matière ou bien réalisés séparément puis rapportés sur la platine. Chaque palier 32 comprend une gorge 36 dans laquelle s'insère l'excroissance 30, consistant en un pion, ou en un plot, du support 10. Lorsque les moyens d'actionnement associés sont enclenchés, l'excroissance est susceptible de rouler dans la gorge formée dans le palier et de faciliter le guide en rotation du module autour du deuxième axe de rotation 5.

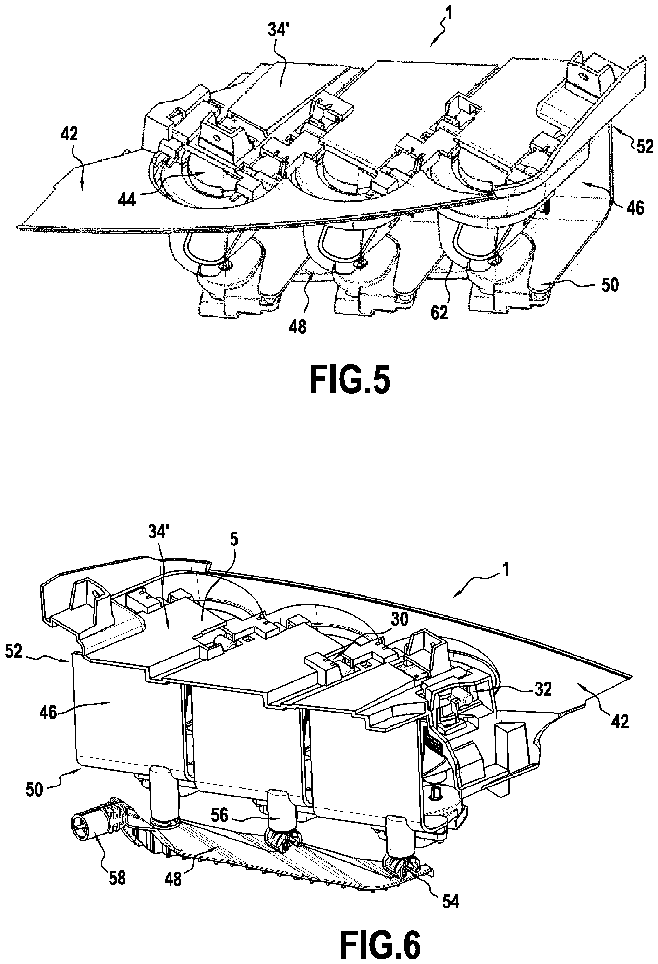

Chaque module lumineux 2 est associé à une platine ou une portion de platine, qui vient en recouvrement du module lumineux, notamment du support 10. Dans un premier mode de réalisation du dispositif d'éclairage et/ou de signalisation selon l'invention, illustré sur les figures 3 et 4, une portion de platine est individuellement associée à un seul module lumineux 2 et les trois portions respectivement associées à chacun des modules sont solidarisées entre elles pour former une platine 34, et dans un deuxième mode de réalisation illustré sur les figures 5 et 6, un enjoliveur, ou masque, 34' recouvre sensiblement l'ensemble des trois modules lumineux 2 et les portions de platine associées.

Dans le premier mode de réalisation illustré sur les figures 3 et 4, chaque platine 34 comporte deux parties parmi lesquelles une première partie 38 prenant la forme d'une barre portant à ses extrémités les paliers 32 et une deuxième partie 40 prolongeant perpendiculairement la première partie sensiblement au centre de celle-ci. Pour deux des platines 34, la deuxième partie 40 forme un coude prolongé jusqu'à une extrémité de la première partie de la platine voisine permettant de relier la portion centrale de la première partie 38 de platine 34 d'un premier module lumineux 2 à une extrémité de première partie de platine 34 d'un autre module lumineux 2 voisin. Bien entendu, cette forme coudée est illustrée ici à titre d'exemple et elle pourrait être modifiée sans modifier la fonction.

On comprendra que la configuration particulière de la platine 34 est adaptée pour minimiser l'encombrement dans le boîtier, tout en conservant un bon maintien des modules lumineux 2 entre eux et avec le boîtier. Chaque module lumineux 2 peut être associé à une platine individuelle, indépendante des autres platines, mais il est compris que la platine est avantageusement réalisée en une seule pièce comportant plusieurs paliers respectivement associés à un module, de sorte que l'on a qu'une seule pièce à fixer dans le boîtier, et un seul moule à prévoir, et que l'on simplifie les conditions de montage, en gagnant du temps et en diminuant les coûts.

Dans le deuxième mode de réalisation illustré sur les figures 5 et 6, le module comporte un enjoliveur 34' recouvrant sensiblement l'ensemble des trois modules lumineux 2 et la ou les platines 34 associées. L'enjoliveur 34' forme ainsi un carénage, notamment prolongé vers la glace de fermeture (ici non visible) du boîtier du projecteur par un plateau 42. L'enjoliveur 34' comprend une pluralité de fenêtres 44, respectivement prévues pour chacun des modules que la platine recouvre, et autorisant de par leur configuration la libre rotation du module lumineux 2 selon le deuxième axe de rotation 5. On comprend qu'en cas de présence d'un tel enjoliveur 34', c'est ce dernier qui porte des moyens de fixation au boîtier plutôt que la ou les platines 34.

Par ailleurs, chaque module lumineux est associé à une bielle 48, ici en forme de plaque en équerre, qui consiste en une pièce de soutien au support 10 et une pièce de transmission d'un mouvement d'un élément d'actionnement 48 (visible sur la figure 6 notamment) de sorte que le module pivote autour du deuxième axe de rotation 5. A cet effet, la bielle 46 est reliée au niveau d'une première extrémité libre 50 avec l'élément d'actionnement 48 et elle est rendue solidaire du support 10 au niveau de sa deuxième extrémité libre 52 opposée.

L'élément d'actionnement 48, tel qu'il est représenté sur les figures 5 et 6, consiste en une plaque s'étendant sous l'ensemble des trois modules lumineux 2. Ladite plaque est porteuse de trois éléments d'encliquetage mâle 54 aptes à coopérer avec des éléments d'encliquetage femelle 56 portés par chacune des bielles en équerre 46. On comprendra que les moyens de fixation de l'élément d'actionnement 48 avec les bielles en équerre 46 pourraient être tout autre que des éléments d'encliquetage, dès lors qu'ils permettent la transmission du déplacement de l'un vers l'autre.

L'élément d'actionnement 48 est rendu mobile sous l'effet d'un tige (ici non visible) solidarisée dans un manchon 58 agencé entre de l'élément d'actionnement. Le déplacement motorisé de la tige génère une translation de l'élément d'actionnement et une poussée correspondante sur chacune des bielles 46 reliées à l'élément d'actionnement.

Le fait que les excroissances 30, solidaires de la bielle en équerre à l'extrémité opposée, soient en butée contre la gorge 36 des paliers 32 génèrent un effet de rotation autour d'un axe sensiblement défini par les lignes de contact des excroissances contre les paliers. Le module continue à pivoter jusqu'à ce que la poussée de l'élément d'actionnement 48 s'arrête. La partie supérieure de la bielle en équerre 46 étant reliée au support 10 de la source lumineuse 8, ce support suit le mouvement de rotation, tandis qu'à l'extrémité opposée, c'est une embase de fixation 60 de l'actionneur 12 qui suit le mouvement de rotation de la bielle en équerre 46 dont il est solidaire. Il en résulte un déplacement en rotation des éléments de déviation optique 6, aussi bien entraînés par le support 10, via les éléments de guidage en rotation supérieurs 14, que par le bloc actionneur 12, de sorte que la position des éléments de déviation optique par rapport à la source lumineuse principale notamment reste fiable tout au long de la rotation autour du deuxième axe 5.

On notera que la bielle en équerre 46 est configurée pour autoriser la libre rotation et le passage des éléments de déviation 6 optique autour du premier axe de rotation 4.

Tel que cela est visible sur les figures 3 et 5, le module lumineux 2 selon l'invention, peut comporter un écran 62 transparent disposé sur le chemin de sortie du faisceau lumineux du module lumineux 2. Cet écran 62 est agencé de manière à recevoir les rayons émis par la ou les sources de lumière additionnelles 25. L'écran est ainsi destiné à produire un effet de style lorsque les sources de lumière additionnelles sont allumées, sans gêner la formation d'un faisceau règlementaire lorsque la source de lumière principale 8 est allumée. On comprend que la présence d'un écran 62 n'a ici qu'une fonction additionnelle et que le module lumineux pourrait, tel qu'illustré sur les figures 1 et 2, ne pas comporter un tel écran en regard des éléments de déviation optique 6.

Le module lumineux 2 comporte en outre un dispositif de commande apte à formuler, sur la base d'informations reçues en provenance de capteurs d'état du véhicule des instructions de commande à envoyer à l'actionneur 12 et à des moyens d'actionnement (non représentés) responsable du mouvement de rotation autour du deuxième axe de rotation. Les instructions consistent à piloter la position angulaire du module lumineux 2 autour du premier axe de rotation 4 et/ou autour du deuxième axe de rotation 5.

La fonction d'éclairage peut alors être directionnelle, grâce à l'actionneur 12 et aux moyens d'actionnements propres au mouvement de rotation autour du deuxième axe de rotation 5 du module lumineux 2. Les mouvements de rotation autour du premier axe de rotation 4 et autour du deuxième axe de rotation 5 peuvent être simultanés et calibrés entre les deux axes ou totalement indépendants.

La rotation simultanée est notamment possible du fait de l'entrainement en rotation de l'actionneur 12 avec le module lumineux 2 lorsque celui-ci est entrainé en rotation autour du deuxième axe de rotation 5. On comprendra que lorsque le module lumineux 2 est entrainé en rotation autour du deuxième axe de rotation 5, la rotation selon le premier axe de rotation 4 est possible notamment grâce à une configuration prévue à cet effet.

La rotation autour de chacun de ces axes de rotation peut être complète ou bien consister en une rotation partielle. Plus particulièrement, dans l'exemple illustré, on comprend que la rotation autour du premier axe de rotation peut être égale à 360° tandis que l'angle de rotation autour du deuxième axe de rotation est égal à quelques degrés, notamment pour des raisons d'encombrement et de besoin fonctionnel des éclairages correspondants.

La rotation dite maximale du module lumineux 2 autour du premier axe de rotation 4 consiste en une rotation des éléments de déviation optique 6 entre une première position où la face réfléchissante 20 est en position active, c'est-à-dire tournée vers l'avant du véhicule, et une deuxième position où c'est une face d'aspect, au dos de la face réfléchissante, qui est active, par exemple pour réaliser une fonction de signalisation au démarrage du véhicule.

La rotation partielle du module lumineux 2 autour du premier axe de rotation 4 consiste en une rotation de quelques degrés des éléments de déviation optique 6, et elle est notamment utilisée lorsque la face réfléchissante 20 est en position active et que la source de lumière principale 8, restant par ailleurs fixe, émet des rayons en direction de cette face réfléchissante 20. On peut ainsi réaliser une fonction d'éclairage directionnelle, du type DBL (Dynamic Bending Light), grâce à l'actionneur 12 du module lumineux qui commande une rotation des éléments de déviation optique 6, d'un à plusieurs degrés autour du premier axe de rotation 4.

La rotation partielle du module lumineux 2 autour du deuxième axe de rotation 5 consiste en une rotation d'un à quelques degrés des éléments de déviation optique 6, et elle est notamment utilisée lorsque les éléments de déviation optique 6 sont en position active et que la source de lumière principale 8 émet des rayons en direction de ces éléments de déviation optique 6, pour décaler de quelques degrés, par rapport à la ligne d'horizon notamment, le faisceau lumineux formé en sortie du module lumineux 2. La rotation maximale consiste en la rotation autorisée par l'encombrement du projecteur.

La fonction d'éclairage peut alors être directionnelle, grâce à l'actionneur 12 et aux moyens d'actionnements propres au mouvement de rotation autour du deuxième axe de rotation 5 du module lumineux 2. La rotation du module lumineux 2 peut ainsi être commandée autour du premier axe de rotation 4 et/ou du deuxième axe de rotation 5, les mouvements de rotation autour de ces deux axes de rotation pouvant être simultanés ou totalement indépendants. On peut noter que la rotation simultanée autour des deux axes de rotation est rendue possible du fait de l'entrainement en rotation de l'actionneur 12 avec le module lumineux 2 lorsque celui-ci est entrainé en rotation autour du deuxième axe de rotation 5.

Nous allons décrire maintenant le fonctionnement du dispositif d'éclairage et/ou de signalisation, et notamment un premier mode dans lequel le faisceau lumineux en sortie de module lumineux 2 est dévié transversalement, et un deuxième mode dans lequel le faisceau lumineux est dévié en sortie de module lumineux verticalement. Ces deux modes de fonctionnement peuvent fonctionner simultanément ou alternativement.

Le premier mode de fonctionnement consiste en ce que l'actionneur 12 transmet à l'arbre de sortie 16 un mouvement de rotation, ledit arbre de sortie 16 entrainant en rotation les éléments de déviation optique 6 autour du premier axe de rotation 4, la rotation étant guidée selon un chemin défini par la configuration des éléments de guidage en rotation 14. Les éléments de déviation optique 6 tournent autour du premier axe de rotation 4 d'un angle défini par les instructions de commande envoyées à l'actionneur, tandis que le support 10 et les sources de lumière qu'il porte restent fixes. La bielle en équerre 46 fait le lien entre le support 10 de la source de lumière et l'actionneur 12, en étant d'une part solidaire du support 10 à une première extrémité, et d'autre part solidaire de l'embase de fixation 60 de l'actionneur, grâce à des moyens de fixation 64, ici un fût de vissage agencé entre la bielle en équerre et l'embase 60 et traversé par une vis de serrage non visible qui fixe la bielle sur l'embase de fixation de l'actionneur. On notera que le centrage de la source de lumière 8 avec le foyer des éléments de déviation optique 6 a été au préalable effectué. Les rayons sont alors déviés en sortie du module lumineux 2, en fonction du degré de rotation commandé et ensuite opéré par l'actionneur 12 le faisceau lumineux de sortie pourra effectuer un mouvement transversal.

Le deuxième mode de fonctionnement consiste en ce que les moyens d'actionnement 48 (visibles sur la figure 4) sont aptes à pousser sur la bielle 46 en sa partie basse, à l'aide des éléments d'encliquetage. Cette poussée sur la bielle en équerre 46 entraîne un pivotement de l'ensemble du module autour du deuxième axe de rotation 5. Les excroissances 30 en saillie de la face latérale 15 du support 10 tournent dans les paliers fixes portés par la platine. La partie basse de la bielle en équerre pivote, entraînant dans sa rotation autour du deuxième axe 5 l'embase de fixation de l'actionneur 12, l'actionneur 12, l'arbre de sortie 16, les éléments de déviation optique 6, les éléments de guidage en rotation 14 et les différentes parties du support 10. On comprend que lorsque la bielle en équerre pivote, le support 10 est également entraîné en rotation autour du deuxième axe de rotation, ce qui entraîne dans la même rotation les éléments de guidage en rotation 14 puis les éléments de déviation optique et l'actionneur. Tous ces composants sont ainsi pris comme un seul ensemble solidaire en rotation autour du deuxième axe de rotation 5 pour réaliser un déplacement vertical du faisceau lumineux en sortie de module lumineux 2.

Le module lumineux selon l'invention, tel qu'il vient d'être décrit, est disposé dans un boîtier (non représenté) de projecteur de véhicule automobile. Notons qu'il est avantageux que les deux projecteurs, gauche et droit, comporte un ensemble équivalent. On comprend que l'on pourra disposer d'une pluralité de module lumineux tel qu'ils viennent d'être décrits, ceux-ci formant un dispositif d'éclairage et /ou de signalisation.

Selon des instructions de commande d'éclairage des sources de lumière et selon des instructions de commande en rotation du module lumineux, l'invention permet la réalisation de différentes combinaisons de fonctions et d'élargir la zone d'éclairage. Un pivotement transversal d'au moins un module lumineux permet un éclairage sur la gauche ou la droite du véhicule tandis qu'un pivotement vertical d'au moins un module lumineux permet un éclairage vers le haut ou vers le bas, en fonction des conditions détectées sur la scène de route.

Le dispositif peut comporter à cet effet des moyens de détection d'une situation de conduite, des moyens de calculs d'une instruction de commande de fonctionnement du ou des modules lumineux en fonction des informations envoyées par ces moyens de détection. Ces instructions de commande permettent une mobilité d'au moins un module en rotation horizontalement et/ou verticalement de sorte que le faisceau lumineux en sortie de module lumineux qu'il génère puisse être orienté.

La description qui précède explique clairement comment l'invention permet d'atteindre les objectifs qu'elle s'est fixée et notamment de réaliser différentes combinaisons de fonctions et d'élargir la zone d'éclairage. Selon des instructions de commande d'éclairage des sources de lumière et selon les instructions de commande en rotation des modules lumineux, l'invention permet la mise en rotation d'un ou de plusieurs modules lumineux 2 selon le premier axe de rotation 4 et/ou selon le deuxième axe de rotation 5, de manière à permettre le déplacement transversal et/ou le déplacement vertical du faisceau lumineux en sortie de module lumineux, l'addition de chaque faisceau lumineux de sortie de module lumineux formant un faisceau lumineux global permettant de couvrir une grande zone d'éclairage et/ou de signalisation tout en respectant des contraintes d'encombrement du dispositif d'éclairage et/ou de signalisation.

## Revendications

1. Module lumineux (2) pour véhicule automobile comprenant au moins :
- une source de lumière (8) apte à émettre des rayons lumineux,
- des éléments de déviation optique (6) montés mobiles en rotation autour d'un premier axe de rotation (4), et agencés de manière à dévier lesdits rayons lumineux pour former un faisceau lumineux,
- un actionneur (12) apte à déplacer en rotation l'élément optique (6) autour du premier axe de rotation (4),
ledit module étant configuré pour être en outre mobile en rotation autour d'un deuxième axe de rotation (5) distinct du premier axe de rotation (4),
- un support (10) coopérant avec les éléments de déviation optique (6) et portant la source de lumière (8), **caractérisé**
**en ce que** ledit deuxième axe de rotation (5) est défini au moins en partie par deux excroissances (30) alignées s'étendant en saillie du support (10), configurées pour coopérer avec des paliers (32) coaxiaux.

2. Module lumineux selon la revendication 1, **caractérisé en ce que** le premier et le deuxième axe de rotation sont sensiblement perpendiculaires l'un par rapport à l'autre.

3. Module lumineux selon la revendication 1 ou 2, comprenant des éléments de guidage en rotation (14) des éléments de déviation optique autour du premier axe de rotation (4), lesdits éléments de guidage de rotation étant agencés entre les éléments de déviation optique (6) et le support (10).

4. Module lumineux selon l'une des revendications précédentes, **caractérisé en ce que** l'actionneur (12) comporte un arbre de sortie (16) s'étendant le long du premier axe de rotation (4) et portant les éléments de déviation optique (6).

5. Module lumineux selon les revendications 3 et 4, **caractérisé en ce que** l'arbre de sortie (16) et les éléments de guidage (14) en rotation sont disposés de part et d'autre des éléments de déviation optique (6) le long du premier axe de rotation (4).

6. Module lumineux selon l'une des revendications précédentes, **caractérisé en ce que** les éléments de déviation optique (6) consistent en un réflecteur de forme sensiblement elliptique, la source de lumière (8) étant disposé sensiblement au voisinage d'un premier foyer dudit réflecteur.

7. Module lumineux selon l'une des revendications précédentes, **caractérisé en ce qu'**il est associé à une bielle (46) qui lui est propre et qui est solidaire d'une part de l'actionneur (12) et, à une deuxième extrémité opposée, d'un support (10) portant la source de lumière (8) et venant en recouvrement des éléments de déviation optique (6) du module lumineux (2) associé.

8. Module lumineux selon la revendication précédente, **caractérisé en ce qu'**il est piloté en rotation autour du deuxième axe de rotation (5) par l'intermédiaire d'un élément d'actionnement (48) apte à pousser sur la bielle (46).

9. Module lumineux selon la revendication précédente, **caractérisé en ce que** l'élément d'actionnement (48) est configuré pour pousser sur une première extrémité de la bielle (46), à l'opposé de l'extrémité de la bielle (46) solidaire du support (10) porteur du deuxième axe de rotation (5).

10. Module lumineux selon la revendication 8 ou 9, **caractérisé en ce que** l'élément d'actionnement (48) consiste en une plaque porteuse de moyens de fixation (90) aptes à coopérer avec des moyens de fixation (92) portés par la bielle (46).

11. Dispositif lumineux, notamment d'éclairage et/ou de signalisation pour véhicule automobile, comprenant au moins un module lumineux (2) selon l'une des revendications précédentes.

12. Dispositif lumineux selon la revendication précédente, **caractérisé en ce qu'**il comporte un boîtier et une glace de fermeture délimitant un logement du au moins un module lumineux.

13. Dispositif lumineux selon la revendication précédente, **caractérisé en ce que** le au moins un module lumineux (2) est associé à au moins une platine (34) solidaire du boîtier et porteuse de paliers (32) participant à la définition du deuxième axe (5) de rotation.

14. Dispositif lumineux selon l'une des revendications 11 à 13, **caractérisé en ce qu'**il comporte un ensemble d'au moins deux modules lumineux (2) selon l'une des revendications 1 à 13, participant chacun à la formation d'un faisceau lumineux, l'addition des faisceaux lumineux primaires formant en sortie du dispositif un faisceau lumineux global.

15. Dispositif lumineux selon l'une des revendications 11 à 14, **caractérisé en ce que** ledit deuxième axe de rotation (5) est propre à chaque module lumineux (2).

## Patentansprüche

1. Leuchtmodul (2) für ein Kraftfahrzeug, das mindestens enthält:
- eine Lichtquelle (8), die Lichtstrahlen emittieren kann,
- optische Ablenkungselemente (6), die drehbeweglich um eine erste Drehachse (4) montiert und so angeordnet sind, dass sie die Lichtstrahlen ablenken, um ein Lichtbündel zu formen,
- ein Stellglied (12), das das optische Element (6) um die erste Drehachse (4) in Drehung verschieben kann,
wobei das Modul konfiguriert ist, außerdem um eine zweite Drehachse (5) anders als die erste Drehachse (4) drehbeweglich zu sein,
- einen Träger (10), der mit den optischen Ablenkungselementen (6) zusammenwirkt und die Lichtquelle (8) trägt,
**dadurch gekennzeichnet, dass** die zweite Drehachse (5) zumindest zum Teil durch zwei sich vom Träger (10) vorstehend erstreckende, ausgerichtete Ausstülpungen (30) definiert wird, die konfiguriert sind, mit koaxialen Lagern (32) zusammenzuwirken.

2. Leuchtmodul nach Anspruch 1, **dadurch gekennzeichnet, dass** die erste und die zweite Drehachse im Wesentlichen lotrecht zueinander sind.

3. Leuchtmodul nach Anspruch 1 oder 2, das Drehführungselemente (14) der optischen Ablenkungselemente um die erste Drehachse (4) enthält, wobei die Drehführungselemente zwischen den optischen Ablenkungselementen (6) und dem Träger (10) angeordnet sind.

4. Leuchtmodul nach einem der vorhergehenden Ansprüche, **dadurch gekennzeichnet, dass** das Stellglied (12) eine Abtriebswelle (16) aufweist, die sich entlang der ersten Drehachse (4) erstreckt und die optischen Ablenkungselemente (6) trägt.

5. Leuchtmodul nach den Ansprüchen 3 und 4, **dadurch gekennzeichnet, dass** die Abtriebswelle (16) und die Drehführungselemente (14) zu beiden Seiten der optischen Ablenkungselemente (6) entlang der ersten Drehachse (4) angeordnet sind.

6. Leuchtmodul nach einem der vorhergehenden Ansprüche, **dadurch gekennzeichnet, dass** die optischen Ablenkungselemente (6) aus einem Reflektor von im Wesentlichen elliptischer Form bestehen, wobei die Lichtquelle (8) im Wesentlichen in der Nähe eines ersten Brennpunkts des Reflektors angeordnet ist.

7. Leuchtmodul nach einem der vorhergehenden Ansprüche, **dadurch gekennzeichnet, dass** es einer Schubstange (46) zugeordnet ist, die ihm eigen ist und die einerseits mit dem Stellglied (12) und an einem zweiten entgegengesetzten Ende mit einem Träger (10) fest verbunden ist, der die Lichtquelle (8) trägt und die optischen Ablenkungselemente (6) des zugeordneten Leuchtmoduls (2) überdeckt.

8. Leuchtmodul nach dem vorhergehenden Anspruch, **dadurch gekennzeichnet, dass** es mittels eines Betätigungselements (48) in Drehung um die zweite Drehachse (5) gesteuert wird, das auf die Schubstange (46) drücken kann.

9. Leuchtmodul nach dem vorhergehenden Anspruch, **dadurch gekennzeichnet, dass** das Betätigungselement (48) konfiguriert ist, auf ein erstes Ende der Schubstange (46) entgegengesetzt zu dem Ende der Schubstange (46) zu drücken, das fest mit dem die zweite Drehachse (5) tragenden Träger (10) verbunden ist.

10. Leuchtmodul nach Anspruch 8 oder 9, **dadurch gekennzeichnet, dass** das Betätigungselement (48) aus einer Trägerplatte von Befestigungseinrichtungen (90) besteht, die mit von der Schubstange (46) getragenen Befestigungseinrichtungen (92) zusammenwirken können.

11. Leuchtvorrichtung, insbesondere zur Beleuchtung und/oder Signalisierung für ein Kraftfahrzeug, die mindestens ein Leuchtmodul (2) nach einem der vorhergehenden Ansprüche enthält.

12. Leuchtvorrichtung nach dem vorhergehenden Anspruch, **dadurch gekennzeichnet, dass** sie ein Gehäuse und eine Verschlussscheibe aufweist, die eine Aufnahme des mindestens einen Leuchtmoduls begrenzt.

13. Leuchtvorrichtung nach dem vorhergehenden Anspruch, **dadurch gekennzeichnet, dass** das mindestens eine Leuchtmodul (2) mindestens einer Platte (34) zugeordnet ist, die fest mit dem Gehäuse verbunden ist und Lager (32) trägt, die an der Definition der zweiten Drehachse (5) beteiligt sind.

14. Leuchtvorrichtung nach einem der Ansprüche 11 bis 13, **dadurch gekennzeichnet, dass** sie eine Einheit von mindestens zwei Leuchtmodulen (2) nach einem der Ansprüche l bis 13 aufweist, die je an der Bildung eines Lichtbündels beteiligt sind, wobei die Summierung der primären Lichtbündel am Ausgang der Vorrichtung ein globales Lichtbündel formt.

15. Leuchtvorrichtung nach einem der Ansprüche 11 bis 14, **dadurch gekennzeichnet, dass** die zweite Drehachse (5) jedem Leuchtmodul (2) eigen ist.

## Claims

1. Luminous module (2) for a motor vehicle comprising at least:
- one light source (8) capable of emitting light rays,
- optical deflection elements (6) mounted to be movable in rotation about a first rotation axis (4), and arranged so as to deflect said light rays to form a light beam,
- an actuator (12) capable of displacing the optical element (6) in rotation about the first rotation axis (4), said module being configured to be also movable in rotation about a second rotation axis (5) distinct from the first rotation axis (4),
- a support (10) cooperating with the optical deflection elements (6) and bearing the light source (8), **characterized in that** said second rotation axis (5) is defined at least partly by two aligned protuberances (30) projecting from the support (10), configured to cooperate with coaxial bearings (32).

2. Luminous module according to Claim 1, **characterized in that** the first rotation axis and the second rotation axis are substantially at right angles to one another.

3. Luminous module according to Claim 1 or 2, comprising rotation guiding elements (14) for guiding the rotation of the optical deflection elements about the first rotation axis (4), said rotation guiding elements being arranged between the optical deflection elements (6) and the support (10).

4. Luminous module according to one of the preceding claims, **characterized in that** the actuator (12) comprises an output shaft (16) extending along the first rotation axis (4) and bearing the optical deflection elements (6).

5. Luminous module according to Claims 3 and 4, **characterized in that** the output shaft (16) and the rotation guiding elements (14) are positioned on either side of the optical deflection elements (6) along the first rotation axis (4).

6. Luminous module according to one of the preceding claims, **characterized in that** the optical deflection elements (6) consist of a reflector of substantially elliptical form, the light source (6) being positioned substantially in the vicinity of a first focus of said reflector.

7. Luminous module according to one of the preceding claims, **characterized in that** it is associated with a connecting rod (46) which is specific to it and which is secured on the one hand to the actuator (12), and, at an opposite second end, to a support (10) bearing the light source (8) and covering the optical deflection elements (6) of the associated light module (2).

8. Luminous module according to the preceding claim, **characterized in that** it is driven in rotation about the second rotation axis (5) by an actuation element (48) capable of pushing on the connecting rod (46).

9. Luminous module according to the preceding claim, **characterized in that** the actuation element (48) is configured to push on a first end of the connecting rod (46), opposite the end of the connecting rod (46) secured to the support (10) bearing the second rotation axis (5).

10. Luminous module according to Claim 8 or 9, **characterized in that** the actuation element (48) consists of a plate bearing fixing means (90) capable of cooperating with fixing means (92) borne by the connecting rod (46).

11. Luminous device, notably a lighting and/or signalling light module for a motor vehicle, comprising at least one luminous module (2) according to one of the preceding claims.

12. Luminous device according to the preceding claim, **characterized in that** it comprises a housing and a closing outer lens delimiting a housing of the at least one luminous module.

13. Luminous device according to the preceding claim, **characterized in that** the at least one luminous module (2) is associated with at least one support assembly (34) secured to the housing and supporting bearings (32) contributing to the definition of the second rotation axis (5) .

14. Luminous device according to one of Claims 11 to 13, **characterized in that** it comprises a set of at least two luminous modules (2) according to one of Claims 1 to 13, each contributing to the formation of a light beam, the sum of the primary light beams forming a global light beam at the output of the device.

15. Luminous device according to one of Claims 11 to 14, **characterized in that** said second rotation axis (5) is specific to each luminous module (2).
